# EUROPEAN PATENT SPECIFICATION

(11) **EP 0 758 051 B1**
(45) Date of publication and mention of the grant of the patent: **04.03.1998**
(21) Application number: 96110318.1
(22) Date of filing: 26.06.1996
(51) Int. Cl.: F02N 15/04, B62M 7/12, F02B 61/02

(54) **Structure for mounting reduction gear of starter motor**
Struktur zum Montieren eines Untersetzungszahnrad für Anlasser
Structure de montage d'un réducteur de démarreur

(30) Priority: 09.08.1995 JP 222803/95
(43) Date of publication of application: 12.02.1997
(73) Proprietor: HONDA GIKEN KOGYO KABUSHIKI KAISHA, Minato-ku Tokyo (JP)
(72) Inventor: Yagasaki, Akio, Wako-shi, Saitama (JP); Ishikawa, Hideo, Wako-shi, Saitama (JP)
(74) Representative: Liska, Horst, Dr.-Ing.

(56) References cited:
- FR-A- 533 404
- FR-A- 2 714 424

## Description

The present invention relates to a structure for mounting a reduction gear interposed between a starter motor and a crank shaft in a starter system of an internal combustion engine.

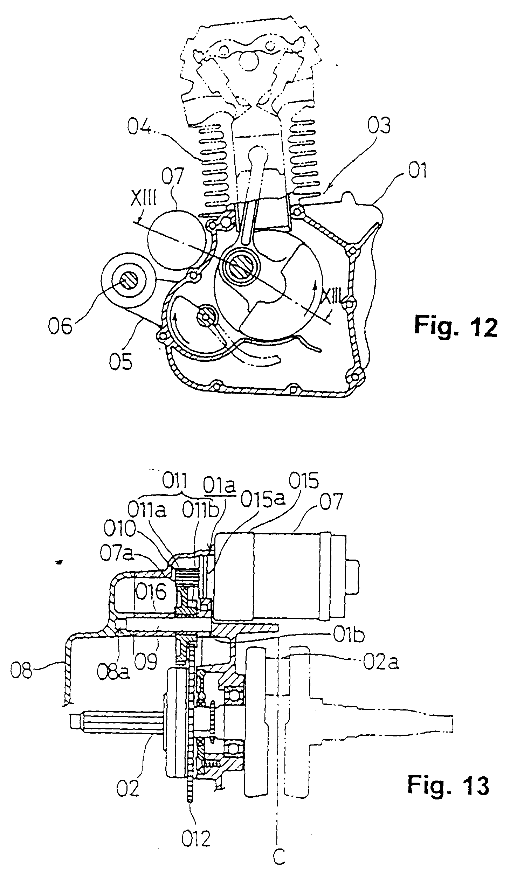

An example of a starter system of an internal combustion engine, disclosed in Japanese Patent Publication No. Hei 5-68398, is shown in Figs. 12 and 13.

The example is used for a motor-bicycle including a unit swing type internal combustion engine. Fig. 12 is a schematic sectional side view of the internal combustion engine; and Fig. 13 is a sectional view taken on line XIII-XIII of Fig. 12 showing an essential portion of the starter system.

An internal combustion engine 03 is provided at the center of the front portion of a unit swing case 01 partially serving as a crank case. The engine 03 has a crank shaft 02 horizontally extending in the lateral direction and an upward extending cylinder 04.

A rear wheel (not shown) is rotatably supported on the rear portion of the unit swing case 01, and the drive of the crank shaft is transmitted to the rear wheel through a belt type transmission mechanism.

A hunger bracket 05 projects forward from the front wall of the unit swing case 01. The leading end portion of the hunger bracket 05 is pivotably supported on a body frame through a pivot 06. The unit swing case 01 is vertically rockable around the pivot 06 together with the rear wheel. A cushioning means is interposed between the rear end of the unit swing case 01 and the body frame positioned over the unit swing case 01.

The starter motor 07 is mounted on the front portion of the unit swing case 01 in front of a crank pin 02a positioned at the crank center C (center in the lateral direction) of the crank shaft 02, with a drive shaft 07a held in parallel to the crank shaft 02.

The starter motor 07 is mounted on the front portion of the unit swing case 01 from the crank center C side (right side). A reduction gear 011 is turnably fitted around a reduction gear shaft 09 provided between the unit swing case 01 and a left case cover 08. A drive gear 010 formed around the drive shaft 07a of the starter motor 07 meshes with a large diameter gear 011a of the reduction gear 011, and a small diameter gear 011b of the reduction gear 011 meshes with a starter system gear 012 on the crank shaft 02 side.

A motor bracket 015 is fitted to the starter motor 07 on the drive shaft 07a side. A cylindrical fitting portion 015a coaxial with the drive shaft 07a is formed on the motor bracket 015, and a circular opening 01a corresponding to the cylindrical fitting portion 015a is formed in the front portion of the unit swing case 01. The starter motor 07 is positioned and fixed to the unit swing case 01 by inserting the cylindrical fitting portion 015a in the circular opening 01a.

The reduction gear shaft 09 rotatably supports the reduction gear 011 meshing with the drive gear 010 of the drive shaft 07a of the starter motor 07. One end of the reduction gear shaft 09 is supported in a bearing hole 01b on the unit swing case 01 side, and the other thereof is supported in a bearing hole 08a on the left case cover 08 side. In addition, a collar 016 is provided around the reduction gear shaft 09 for positioning the reduction gear 011.

The above-described starter system has a feature that the starter motor 07 is positioned and fixed to the unit swing case 01 through the motor bracket 015 by fitting the cylindrical fitting portion 015a in the circular opening 01a. In this system, however, the reduction gear shaft 09 is hung between the bearing holes 01b, 08a respectively formed in the unit swing case 01 and the left case cover 08, and consequently, the assembling accuracy of the reduction gear shaft 09 in terms of bearing alignment cannot be expected to be enhanced and the assembling efficiency of the reduction gear 011 is also poor.

As for the unit swing case 01, the circular opening 01a for fittingly supporting the starter motor 07 and the bearing hole 01b for supporting the reduction gear shaft 09 are independently machined. This is disadvantageous in increasing the number of the machining processes and in making it difficult to enhance the alignment accuracy of machining.

In particular, since one end of the reduction gear shaft 09 is supported in the bearing hole 08a of the left case cover 08, the axial line of the reduction gear shaft 09 is inclined when a positional deviation is generated between the unit swing case 01 and the left case cover 08.

In addition, the left case cover 08 in this system cannot have a floating supporting structure, and thereby a vibration reduction effect cannot be expected.

To cope with the above disadvantages, a system for supporting one end of a reduction gear shaft using a special holder otherwise prepared separately has been disclosed in FR-A-2 714 424 and in Japanese Utility Model Publication No. Hei 2-12306. This system, however, is inconvenient in increasing the number of parts, and also it fails to solve the above disadvantages because the supporting of the starter motor is performed independently from the supporting of the reduction gear.

In view of the foregoing, the present invention has been made, and an object of the present invention is to provide a structure of mounting a reduction gear of a starter motor, which is capable of enhancing the accuracy and efficiency in assembling a reduction gear without any special holder, making easy the machining of the fitting portions for assembly, and improving the machining accuracy.

According to a preferred mode of the present invention, there is provided a structure for mounting a reduction gear of a starter motor, including: a motor bracket, integrally fixed on the starter motor, for fixedly supporting the starter motor on a crank case; a bracket side bearing, provided on the motor bracket, for supporting one end of a reduction gear shaft; a bracket side fitting portion formed on the motor bracket at a position around the bracket side bearing; a case side bearing, provided on the crank case, for supporting the other end of the reduction gear shaft; and a case side fitting portion formed on the crank case at a position around the case side bearing; wherein one of the bracket side fitting portion and the case side fitting portion is inserted in the other one.

With the above mounting structure, the bearings for the reduction gear shaft are provided both on the motor bracket integrated with the starter motor and the crank case, and fitting portions fitted with each other by insertion are each formed around the bearings, whereby the starter motor is positioned and fixed on the crank case by fitting of the fitting portions. The structure is thus advantageous to enhance the assembling accuracy in terms of bearing alignment of the reduction gear shaft assembled together with the starter motor by fitting of both the fitting portions, and to enhance assembling efficiency by reducing the number of the assembling processes because of the simultaneous assembling of the reduction gear with the starter motor.

Moreover, since the fitting portions of the crank case and the motor bracket are formed around the bearings for the reduction gear shaft, it becomes possible to machine the fitting portions at the same time when the bearings are machined, and hence to reduce the number of the machining processes and improve the machining accuracy.

The above mounting structure does not require any special holder for mounting bearings of the reduction gear shaft, and allows the floating supporting structure to be applied to the transmission case cover and to achieve a vibration reduction effect.

In the above mounting structure, preferably, the bracket side fitting portion on the motor bracket side is formed in a columnar or cylindrical shape, and the bracket side bearing is provided at the center of the bracket side fitting portion; and the case side fitting portion on the crank case side is formed in a circular hole having the inside diameter substantially equal to the outside diameter of the bracket side fitting portion, and the case side bearing is provided at the center of the circular hole of the case side fitting portion. The mounting structure having such a configuration is advantageous to easily machine the fitting portions of the crank case and the motor bracket at the same time when the bearings for the reduction gear shaft are machined, and hence to further enhance the machining accuracy, particularly by reducing the number of the machining processes.

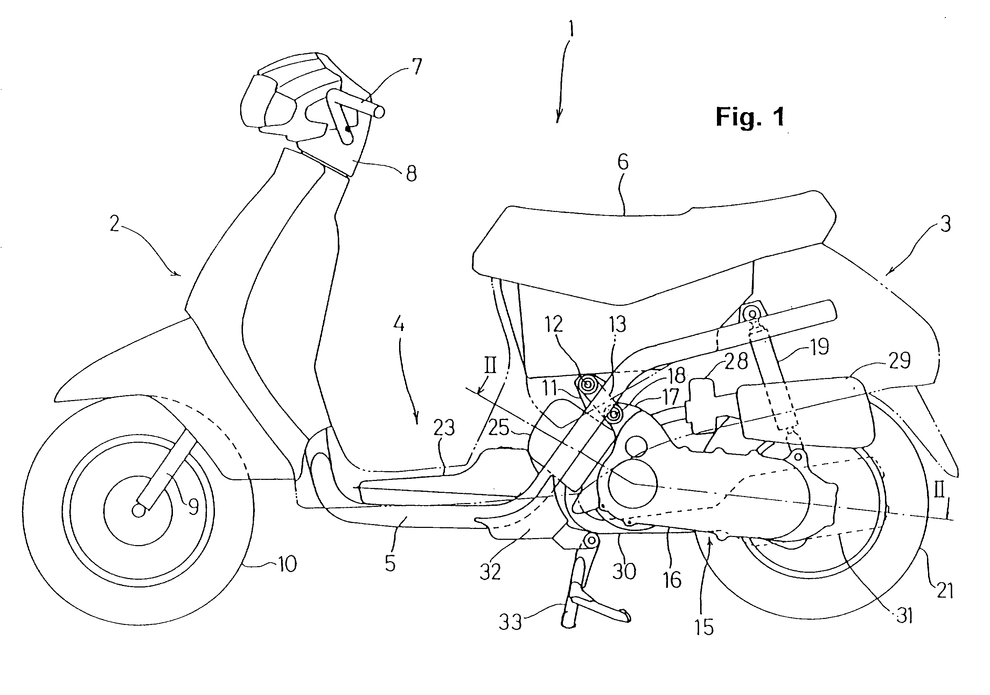

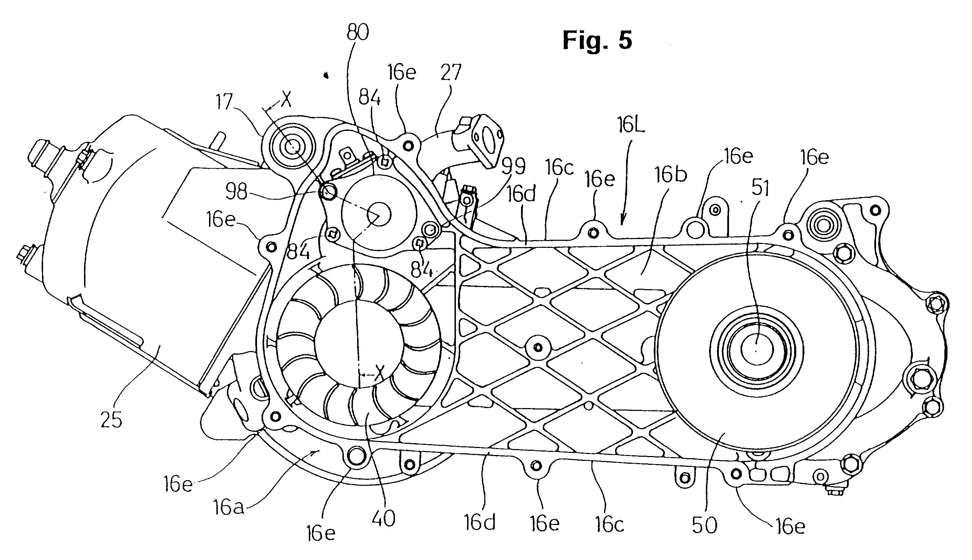

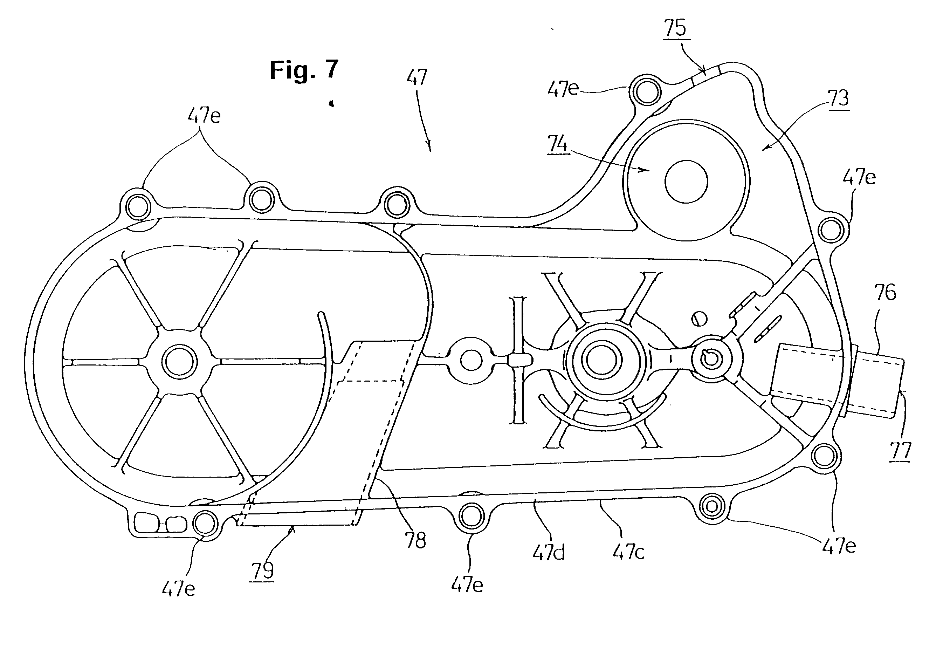

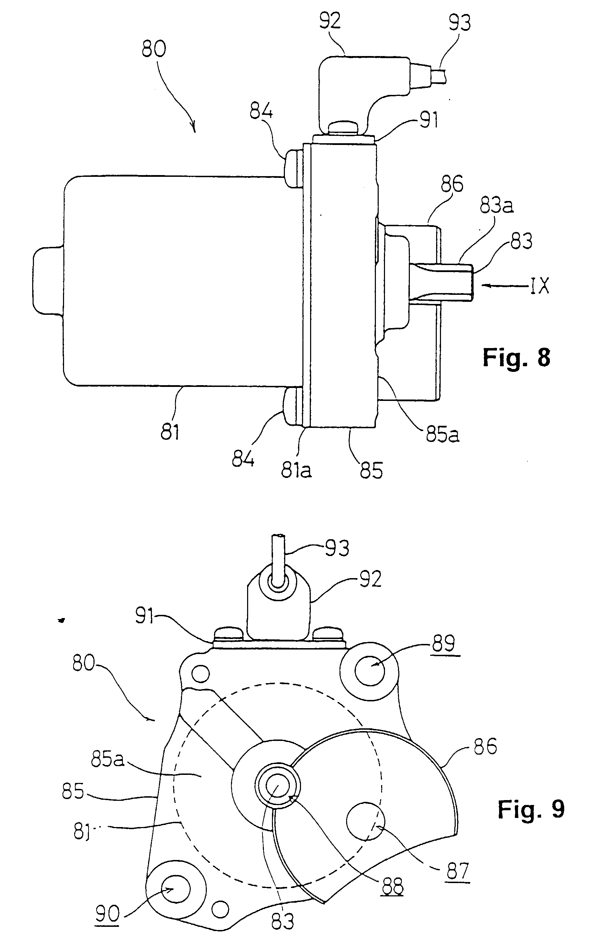

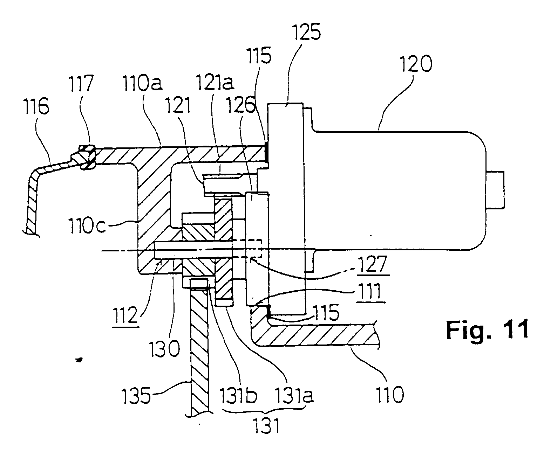

Hereinafter, one embodiment of the present invention will be described with reference to Figs. 1 to 10; another embodiment will be described with reference to Fig. 11:
Fig. 1:
   A side view of a scooter type motor-bicycle used for one embodiment of the present invention.
Fig. 2:
   A sectional view taken on line II-II of Fig 1 showing the internal combustion engine of the scooter type motor-bicycle.
Fig. 3:
   A sectional side view taken on the crank center of the internal combustion engine of Fig. 1.
Fig. 4:
   A partial top view of the internal combustion engine.
Fig. 5:
   A side view showing a state that a transmission cover of the internal combustion engine is removed.
Fig. 6:
   A side view of a crank case portion of a left unit case.
Fig. 7:
   A right side view of the transmission case cover.
Fig. 8:
   A side view of a starter motor.
Fig. 9:
   A view seen along an arrow IX of Fig. 8.
Fig. 10:
   A sectional view taken on line X-X of Fig. 5.
Fig. 11:
   A sectional view showing an essential portion of another embodiment.
Fig. 12:
   A sectional side view showing a related art structure for mounting a starter motor.
Fig. 13:
   A sectional view taken on line XIII-XIII of Fig. 12.

Fig. 1 is a side view of a scooter type motor-bicycle 1 including a unit swing type internal combustion engine to which the present invention is applied.

A front body 2 is connected to a rear body 3 by way of a low floor portion 4. A body frame 5 supporting a vehicular body is divided into two parts after being descended from the front body 2. The two divided parts of the body frame 5 extend rearward under the floor portion 4 and are inclined upward, rearward to the rear body 3.

A seat 6 is provided on the upper portion of the rear body 3, and a steering head 8 having a handle 7 is provided on the opposite side, that is, on the upper portion of the front body 2.

A front wheel 10 operable by the handle 7 is suspended from the front body 2 through a front fork 9.

Each of brackets 11, 11 is erected at the upper position of an obliquely upward inclined portion on the rear side of one of the right and left divided parts of the body frame 5. A pivot 12 is provided between both the brackets 11, 11. One-ends of links 13 are pivotably supported by the pivot 12, and the other ends of the links 13 are connected to a pair of right and left hunger brackets 17, 17 which project upward from the front portion of a unit swing case 16 of a swing unit 15 through a pivot 18. The front portion of the swing unit 15 is vertically rockably supported by the links 13, 13. Rear cushions 19 are provided in back of the links 13, 13 so as to be interposed between the swing unit 15 and the body frame 5.

An internal combustion engine 20 is integrally provided on the front portion of the swing unit 15, and a rear wheel 21 is rotatably supported by the rear portion of the swing unit 15. A power of the internal combustion engine 20 is transmitted to the rear wheel 21 through a belt type transmission mechanism 22 with an automatic transmission function.

A fuel tank 23 is fixed on the body frame 5 under the floor portion 4.

The internal combustion engine 20 is of a two-cycle type, wherein a cylinder 25 projects slightly upward from the front portion of the unit swing case 16 and it passes between the right and left parts of the body frame 5 under the links 13.

The engine 20 also adopts a crank case reed valve system having a reed valve 26 provided on a crank case portion, wherein an intake pipe 27 extends from the upper portion of the crank case portion of the unit swing case 16 and is connected to a carburetor 28 to which air is introduced from an air cleaner 29 mounted on the rear portion of the unit swing case 16.

An exhaust pipe 30 extends downward from the lower portion of the cylinder 25 of the engine 20, bypassing the lower portion of the crank case portion rearward and leftward, and is connected to a muffler 31 disposed on the right side of the body.

Brackets 32 project rearward from the two divided parts of the body frame 5 at positions behind the floor portion 4. A stand 33 is pivotably supported on the leading end of the bracket 32 positioned under the front portion of the swing unit 15.

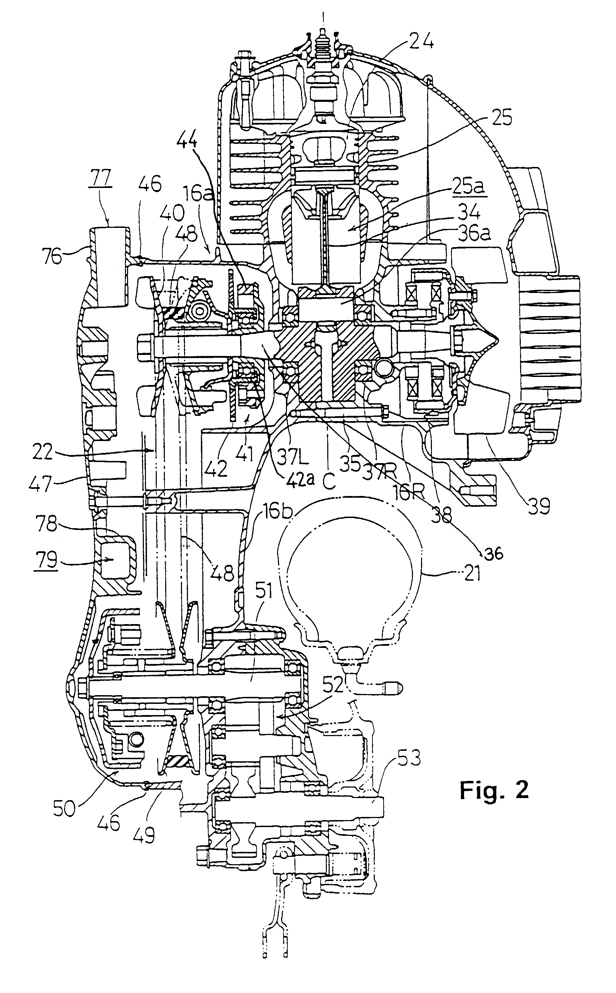

Fig. 2 is a sectional view substantially taken on line II-II of Fig. 1 showing the swing unit 15.

A front crank case portion 16a of the unit swing case 16 is divided into a left unit case 16L and a right unit case 16R. Both the cases 16L and 16R are connected to each other by means of bolts 35.

The cylinder 25 is projectingly provided in the front crank case portion 16a.

### [0026]

A crank shaft 36 extending in the lateral direction is rotatably supported by a main bearing 37R mounted in the right case 16R and a main bearing 37L mounted in the left unit case 16L. Both the ends of the crank shaft 36 are protruded outward from the crank case portion 16a.

A piston 24 reciprocating in a cylinder hole 25a of the cylinder 25 is connected to a crank pin 36a of the crank shaft 36 by means of a connecting rod 34.

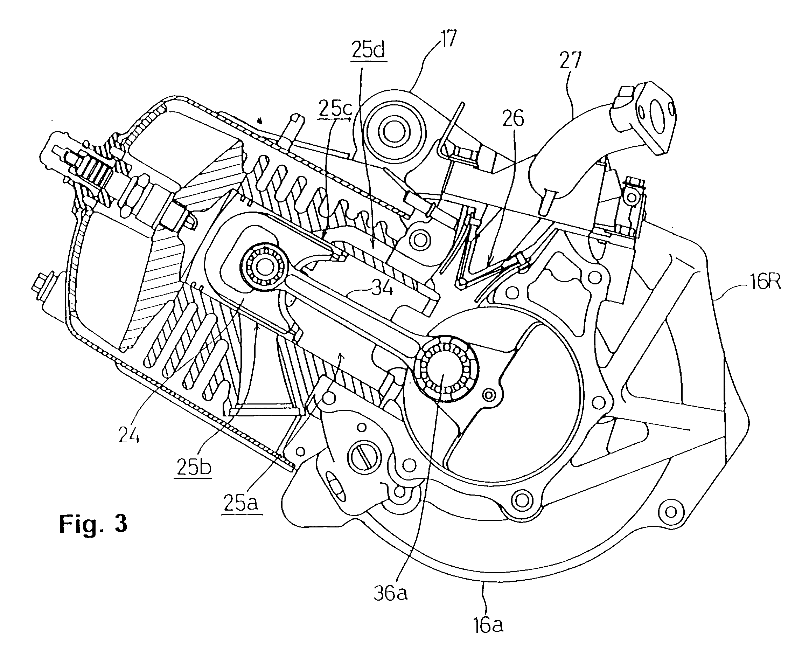

Referring to Fig. 3, the cylinder hole 25a has an exhaust port 25b and a scavenging port 25c each of which is opened/closed by the piston 24. The reed valve 26 is opened by a negative pressure generated in the crank case portion 16a through lifting of the piston 24, and fuel-air mixture is sucked from the carburetor 28 into the crank case portion 16a through the reed valve 26. The fuel-air mixture is compressed by lowering of the piston 24, and is supplied from the scavenging port 25c to the cylinder hole 25a through a scavenging passage 25d.

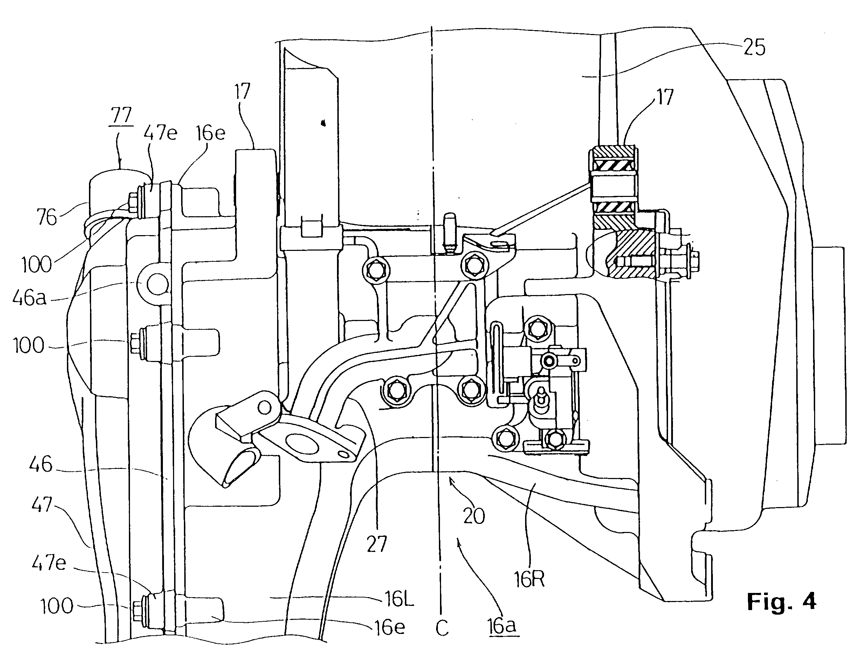

The reed valve 26 is disposed substantially at the crank center C (center in the lateral direction) where the crank pin 36a is positioned, and the intake pipe 27 connected to the reed valve 26 extends upward, obliquely, leftward from the position near the crank center C and is connected to the carburetor 28 as shown in Fig. 4.

A power generator 38 and a cooling fan 39 are mounted on the right end portion of the crank shaft 36. A drive pulley 40 of the belt type transmission mechanism 22 is mounted on the left end of the crank shaft 36. A starter one-way clutch 41 is provided on the right side of the drive pulley 40.

The starter one-way clutch 41 is of a roller type, in which a starter driven gear 42 integrally forms an inner ring 42a; an outer ring 44, which is relatively rotatable with respect to the inner ring 42a through a bearing 43 and integrated with the crank shaft 36, has a cam face on the inner peripheral surface; and a roller 45 is interposed between the inner ring 42a and the outer ring 44.

A transmission case wall 16b of the left unit case 16L extends rearward from the crank case portion 16a. The left opening surface of the transmission case wall 16b is covered with a transmission case cover 47 through a packing 46. The left side unit case 16L covered with the transmission case cover 47 contains the belt type transmission mechanism 22 in which the rotation of the crank shaft 36 is transmitted to a driven shaft 51 through the drive pulley 40, a V-belt 48, a driven pulley 49 and a clutch 50, and the rotation of the driven shaft 51 is transmitted to a rear wheel shaft 53 at the rear end of the left side unit case 16L through a reduction gear system 52.

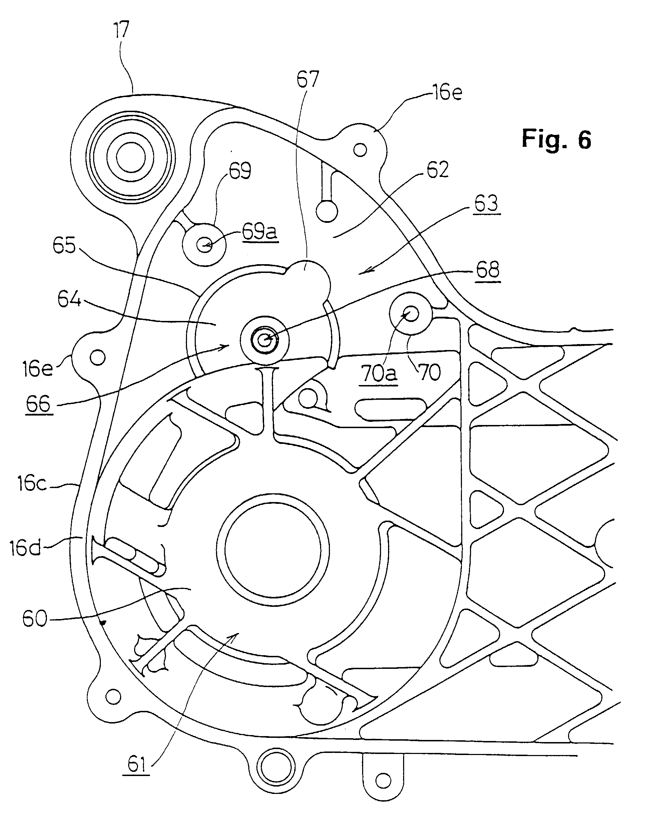

In the left unit case 16L of the unit swing case 16 longer in the longitudinal direction, which has the transmission case wall 16b extending rearward from the crank case portion 16a as described above, the periphery of the left opening is surrounded by an outer peripheral wall 16c as shown in Figs. 5 and 6. The end surface of the outer peripheral wall 16c serves as a mating face 16d, and bolt bosses 16e project outward from the outer peripheral wall 16c.

Referring to Fig. 6, the crank case portion 16a of the left unit case 16L has a circular space 61 for containing the starter one-way clutch 41. The circular space 61 is formed of a side wall 60 and a peripheral wall continuous to the side wall 60. The side wall 60 is formed in a circular shape centered at a circular hole to which the main bearing 37L supporting the crank shaft 36 is fitted. The outer peripheral wall 16c is swelled in a triangular shape at a position over the circular space 61, to form a triangular space 63 (described in detail later) for containing a starter motor 80 in combination with a triangular side wall 62.

The left hunger bracket 17 projects forward from the outer peripheral wall 16c forming the triangular space 63.

The side wall 60 forming the circular space 61 is stepped to be deeper (leftward) than the side wall 62 forming the triangular space 63. A substantially semi-circular side wall 64 having an intermediate height is formed on the side wall 62 forming the triangular space 63 along the stepped portion. A cylindrical wall 65 having a circular hole 66 is formed around the side wall 64.

A nearly lower half of each of the circular hole 66 and the cylindrical wall 65 is cut-off by the circular space 61. A small semi-circular portion 67 is formed at an upper portion of the cylindrical wall 65.

A bearing hole 68 is formed at the center of the side wall 64 having the circular hole 66.

Bolt bosses 69, 70 are projectingly provided on the side wall 62 forming the triangular space 63 at a front position obliquely upward inclined and a rear position, respectively. Bolts holes 69a, 70a, each extending in the lateral direction, are formed in the bolt bosses 69, 70, respectively.

As shown in Figs. 2, 7 and 10, the transmission case cover 47 covering the left opening of the left unit case 16L has a right opening corresponding to the left opening of the left unit case 16L. An outer peripheral wall 47c corresponding to the outer peripheral wall 16c of the left unit case 16L, a mating face 47d corresponding to the mating face 16d, and a bolt boss 47e corresponding to the bolt boss 16e are formed around the side wall 47a longer in the longitudinal direction.

The front portion of the outer peripheral wall 47c is swelled upward, to form a triangular space 73, and a cutout 75 is formed in the upper portion of the rear side of the triangular shape of the triangular space 73.

The central portion of the side wall forming the triangular space 73 is slightly swelled outward in a circular shape, to form a circular space 74.

A cylinder 76 extending in the longitudinal direction is integrally formed on the front wall of the outer peripheral wall 47c of the transmission case cover 47 in such a manner as to pass therethrough. The front end of the cylinder 76 is opened, to form an outside air introducing port 77 for introducing an air outside the transmission case cover 47 into the transmission case.

A square cylinder 78 is formed on the side wall 47a at a position slightly shifted rearward from the center of the side wall 47a. The square cylinder 78 has a downward exhaust port 79 extending rearward, obliquely, downward from an opening formed at the center height portion of the inside of the side wall 47a, and passing through the lower wall of the outer peripheral wall 47c.

An air introduced from the air introducing port 77 positioned at the front portion of the transmission case cover 47 cools the transmission mechanism using a V-belt 48 in the transmission case, and is discharged from the exhaust port 79.

A starter motor 80 is disposed in the triangular space 63 of the crank case portion 16a of the left side unit case 16L and in the triangular space 73, of the transmission case cover 47, corresponding to the triangular space 63. As shown in Figs. 8 to 10, the starter motor 80 includes a cylindrical outer case 81 and an inner rotor 82 rotatably supported around a drive shaft 83 in the cylindrical outer case 81. A motor bracket 85 is integrally fixed on an outer flange 81a by means of screws 84 on the opening side of the outer case 81 from which the drive shaft 83 projects.

A drive gear 83a is formed around the drive shaft 83 at the portion thereof projecting outward from the motor bracket 85.

A columnar fitting portion 86 projects from a side surface 85a, of the motor bracket 85, from which the drive shaft 83 projects. At this time, the outer peripheral edge of the fitting portion 86 surrounds the drive shaft 83 as shown in Fig. 9.

The fitting portion 86 has the outside diameter being nearly equal to the inside diameter of the circular hole 66 provided in the triangular space 63 of the left unit case 16L. A bearing hole 87 corresponding to the bearing hole 68 formed in the circular hole 66 is formed at the center of the fitting portion 86. Like the circular hole 66, a lower portion of the fitting portion 86 is partially cut off, and an upper portion thereof is partially cut off in a semi-circular shape corresponding to the small circular portion 67, to form a small circular portion 88 functioning as a passage of the drive shaft 83.

Bolt passing holes 89, 90 are formed in the side surface 85a of the motor bracket 85 at positions nearly symmetric with respect to the drive shaft 83. The bolt passing holes 89, 90 correspond to the bolt holes 69a, 70a of the bolt bosses 69, 70 of the left unit case 16L, respectively.

A cover plate 91 is provided to cover an opening formed in part of the peripheral surface of the motor bracket 85. A connecting portion 92 for connecting a cord extending from the starter motor 85 is provided on the cover plate 91, and a cord 93 extends outward from the connecting portion 92.

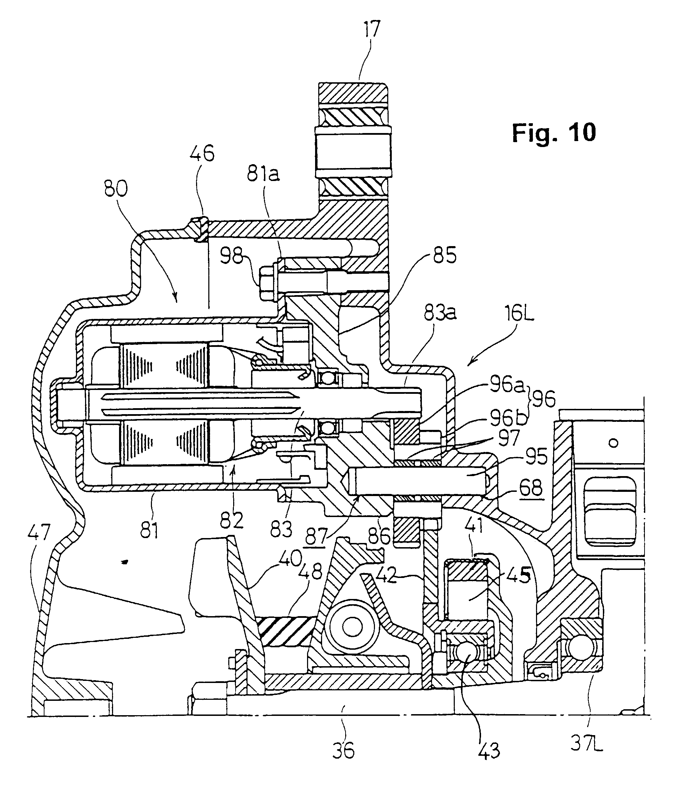

Both the ends of a reduction gear shaft 95 are inserted in the bearing hole 68 formed in the left unit case 16L and the bearing hole 87 formed in the motor bracket 85. A reduction gear 96 is rotatably supported on the reduction gear shaft 95 through a bearing bush 97 put between the bearing holes 68, 87 (see Fig. 10).

The reduction gear 96 has a large diameter gear 96a and a small diameter gear 96b coaxially integrated with the large diameter gear 96a.

The mounting of the starter motor 80 integrated with the motor bracket 85 onto the left unit case 16L will be described. First, the right end of the reduction gear shaft 95 fitted with the reduction gear 96 through the bearing bush 97 is inserted in the bearing hole 68 of the left unit case 16L, and at the same time the small diameter gear 96b is made to mesh with the starter driven gear 42 of the starter one-way clutch 41 fitted on the crank shaft 36.

Next, the starter motor 80 is mounted in the triangular space 63 of the left unit case 16L from the left side in such a posture that the motor bracket 85 is positioned on the right side and the drive shaft 83 is horizontally held in the lateral direction.

At this time, the other end of the reduction gear shaft 95 with one end already inserted in the bearing hole 68 is inserted in the bearing hole 87 of the motor bracket 85, and the columnar fitting portion 86 of the motor bracket 85 is inserted in the circular hole 66 while matching the projecting drive shaft 83 with the small circular portion 67, so that the drive gear 83a at the leading end of the drive shaft 83 meshes with the large diameter gear portion 96a of the reduction gear 96.

The motor bracket 85 is adjusted to be slightly turned around the reduction gear shaft 95 so that the bolt passing holes 89, 90 correspond to the longitudinal bolt holes 69a, 70a, and the bolts 98, 99 are respectively made to pass through these bolt holes and to be screwed therewith. The starter motor 80 is thus mounted on the left unit case 16L.

The drive gear 83a of the drive shaft 83 of the starter motor 80 thus mounted meshes with the large diameter gear 96a of the reduction gear 96, and the small diameter gear 96b integrated with the large diameter gear 96a meshes with the starter driven gear 42 of the starter one-way clutch 41 (see Fig. 10). Accordingly, the drive of the starter motor 80 is transmitted to the crank shaft 36 through the reduction gear 96, and the starter one-way clutch 41 for starting the internal combustion engine 20.

The starter motor 80 mounted on the left unit case 16L is positioned near the upper side of the drive pulley 40 of the belt-type transmission mechanism 22 as shown in Fig. 10, with the left half thereof projecting leftward from the left unit case 16L.

The left side of the left unit case 16L is then covered with the transmission case cover 47, with the packing 46 held between the mating faces 16d, 47d.

The packing 46, which is U-shaped in section, is previously fitted to the mating face 47d of the transmission case cover 47 and is brought in press-contact with the mating face 16d of the left unit case 16L.

A plurality of the bolt bosses 16e provided around the outer peripheral wall 16c of the left unit case 16L are matched with the bolt bosses 47e on the transmission case cover 47 side, and then fastened thereto by screwing of bolts 100. The transmission case cover 47 having the floating structure is thus mounted on the transmission case 16L through the packing 46.

An upper front portion of the packing 46 is formed of a grommet 46a. The grommet 46a is fitted in the cutout 75 formed in the outer peripheral wall 47c of the transmission case cover 47 (see Fig. 4), and the cord 93 connected to the starter motor 80 extends outward from the grommet 46a.

The starter motor 80 in this embodiment is thus mounted.

The left unit case 16L has the bearing hole 68, and the motor bracket 85 integrated with the starter motor 80 has the bearing hole 87. The bearing holes 68, 87 are used for supporting the end portions of the reduction gear shaft 95. The circular hole 66 and the columnar fitting portion 86 are respectively formed around the bearing holes 68, 87 in such a manner as to correspond to each other. The starter motor 80 is positioned and fixed on the left unit case 16L by supporting the reduction gear shaft 95 with the reduction gear 96 in the bearing holes 68, 87, and inserting the columnar fitting portion 86 in the circular hole 66. Accordingly, it is possible to significantly enhance the assembling accuracy of the reduction gear shaft 95 and to improve the assembling efficiency by reducing the number of the assembling processes.

With respect to the left unit case 16L, the bearing hole 68 is formed at the center of the circular hole 66, and accordingly the circular hole 66 and the cylindrical wall 65 can be machined at the same time when the bearing hole 68 is machined. This is effective to reduce the number of the machining processes, and to improve the accuracy in machining alignment.

With respect to the motor bracket 85, similarly, the bearing hole 87 and the columnar fitting portion 86 can be simultaneously machined, to thereby reduce the number of the machining processes and improve the accuracy in machining alignment.

The one end of the reduction gear shaft 95 is supported in the bearing hole 68 formed in the left side unit case 16L and the other end thereof is supported in the bearing hole 87 formed in the motor bracket 85 integrated with the starter motor 80. Namely, the reduction gear shaft 95 can be supported without any special holder and also it is not supported on the transmission case cover 47, so that the positional accuracy of the reduction gear shaft 95 can be improved by eliminating the axial inclination of the reduction gear shaft 95 due to positional deviation of the transmission case cover 47.

The transmission case cover 47 in this embodiment is of a floating supporting structure, and thereby the vibration reducing effect can be expected.

In the above-described embodiment, the starter motor 80 is disposed in the unit swing case 16. Next, another embodiment in which the starter motor is mounted on the outer side of a general crank case will be described with reference to Fig. 11.

Fig. 11 is a sectional view showing an essential portion in which a starter motor 120 is mounted on a crank case 110. A columnar and thin fitting portion 126, having a center shifted from the center of a drive shaft 121 of the starter motor 120, is formed on a motor bracket 125 integrated with the starter motor 120. The central portion of the fitting portion 126 is slightly swelled, and a bearing hole 127 is formed in the center of the fitting portion 126.

On the other hand, a left peripheral wall 110a of the front portion of a crank case 110 is swelled forward, and is opened leftward. The inner edge of the opening partially forms a circular fitting portion 111. The starter motor 120 is mounted in such a manner that the motor bracket 125 covers the opening. At this time, the starter motor 120 is positioned by inserting the columnar fitting portion 126 of the motor bracket 125 in the circular fitting portion 111 on the crank case 110 side.

An inner wall 110c extends inward from the left peripheral wall 110a swelled from the cranck case 110, and a bearing hole 112 is formed at the center of the circular fitting portion 111 of the inner wall 110c. One end of a reduction gear shaft 130 rotatably supporting a reduction gear 131 is inserted in the bearing hole 112, and the other end of the reduction gear shaft 130 is inserted in the bearing hole 127 of the motor bracket 125.

Namely, the starter motor 120 is positioned and fixed to the crank case 110 by inserting one end of the reduction gear shaft 130 with the reduction gear 131 in the bearing hole 112 on the crank case 110 side; allowing a small diameter gear 131b of the reduction gear 131 to mesh with a starter driven gear 135 of a starter one-way clutch; inserting the other end of the reduction gear shaft 130 in the bearing hole 127 of the motor bracket 125, and inserting the columnar fitting portion 126 of the motor bracket 125 in the circular fitting portion 111 on the crank case 110 side.

A packing 115 is interposed at a press-contact surface between the opening edge of the crank case 110 and the motor bracket 125, to obtain a waterproof structure.

A left case cover 116 is mounted to the left side of the crank case 110 through a packing 117.

In the assembling of the starter motor 120 on the crank case 110, a drive gear 121a formed at the leading end of the drive shaft 121 of the starter motor 120 meshes with a large diameter gear 131a of the reduction gear 131.

The drive of the starter motor 120 is thus transmitted to a starter driven gear 135 and to the crank shaft through the reduction gear 131.

The starter motor 120 can be mounted on the outer side of the crank case 110 as described above. Namely, the circular fitting portion 111 and the columnar fitting portion 126 are respectively formed on the crank case 110 and the motor bracket 125, and the bearing holes 112 and 127 are respectively formed in the centers of the fitting portions 111 and 126, and accordingly, the starter motor 120 can be positioned and fixed on the crank case 110 by inserting the columnar fitting portion 126 in the circular fitting portion 111 while supporting the reduction gear shaft 130 in the bearing holes 112, 127. As a result, it becomes possible to enhance the assembling accuracy of the reduction gear shaft 130 and to reduce the number of the assembling processes.

With respect to the crank case 110 and the motor bracket 125, the circular fitting portion 111 and the columnar fitting portion 126 can be machined at the same time when the bearing holes 112, 127 are machined, to thereby reduce the number of the machining processes and to improve the accuracy in machining alignment.

The reduction gear shaft 130 can be supported at a high positional accuracy without any special holder, and the floating supporting structure can be applied to the left case cover 116.

In summary it is an object to provide a structure for mounting a reduction gear of a starter motor, which is capable of enhancing the accuracy and efficiency in assembling the reduction gear without any special holder, and easily machining bearings and fitting portions used for mounting the reduction gear at a high machining accuracy.

A structure for mounting a reduction gear of a starter motor is provided. A motor bracket 85 for fixedly supporting a starter motor 80 to a crank case 16L is integrally fixed on the starter motor 80. A bracket side bearing 87 for supporting one end of a reduction gear 95 is provided in the motor bracket 85. A bracket side fitting portion 86 is formed on the motor bracket 85 at a position around the bracket side bearing 87. A case side bearing 68 for supporting the end of the reduction gear 95 is provided in the crank case 16L. A case side fitting portion 66 is formed on the crank case 16L at a position around the case side bearing 68. One of the bracket side fitting portion 86 and the case side fitting portion 66 is inserted in the other one.

## Claims

1. A structure for mounting a reduction gear (96;131) of a starter motor (80;120), comprising:
a motor bracket (85;125), integrally fixed on said starter motor (80;120), for fixedly supporting said starter motor (80;120) on a crank case (16L;110)
a bracket side bearing (87;127), provided on said motor bracket (85;125), for supporting one end of a reduction gear shaft (95;130);
a bracket side fitting portion (86;126) formed on said motor bracket (85;125) at a position around said bracket side bearing (87;127);
a case side bearing (68;112) provided on the crank case (16L;110), for supporting the other end of said reduction gear shaft (95;130); and
a case side fitting portion (66;111) formed on said crank case (16L;110) at a position around said case side bearing (68;112);
wherein one of said bracket side fitting portion (86;126) and said case side fitting portion (66;111) is inserted in the other one.

2. A structure for mounting a reduction gear (96;131) of a starter motor (80;120) according to claim 1, wherein said bracket side fitting portion (86;126) on the motor bracket side is formed in a columnar or cylindrical shape, and said bracket side bearing (87;127) is provided at the center of said bracket side fitting portion (86;126); and
said case side fitting portion (66;111) on the crank case side is formed in a circular hole having the inside diameter substantially equal to the outside diameter of said bracket side fitting portion (86;126), and said case side bearing (68;112) is provided at the center of said circular hole of said case side fitting portion (66;111).

## Patentansprüche

1. Struktur zur Anbringung eines Untersetzungsgetriebes (96; 131) eines Anlassermotors (80; 120), umfassend:
einen Motorträger (85; 125), der an dem Anlassermotor (80; 120) integral befestigt ist, um den Anlassermotor (80; 120) an einem Kurbelgehäuse (16L; 110) fest zu lagern;
ein an dem Motorträger (85; 125) vorgesehenes trägerseitiges Lager (87; 127) zum Lagern eines Endes einer Untersetzungsgetriebewelle (95; 130);
einen an dem Motorträger (85; 125) an einer Stelle um das trägerseitige Lager (87; 127) ausgebildeten trägerseitigen Paßbereich (86; 126);
ein an dem Kurbelgehäuse (16L; 110) vorgesehenes gehäuseseitiges Lager (68; 112) zum Lagern des anderen Endes der Untersetzungsgetriebewelle (95; 130); und
einen an dem Kurbelgehäuse (16L, 110) an einer Stelle um das gehäuseseitige Lager (68; 112) herum ausgebildeten gehäuseseitigen Paßbereich (66; 111);
wobei ein Bereich des trägerseitigen Paßbereichs (86; 126) und des gehäuseseitigen Paßbereichs (66; 111) in den anderen Bereich eingefügt ist.

2. Struktur zur Anbringung eines Untersetzungsgetriebes (96; 131) eines Anlassermotors (80; 120) nach Anspruch 1, wobei der trägerseitige Paßbereich (86; 126) auf der Seite des Motorträgers in einer säulenförmigen oder zylindrischen Gestalt ausgebildet ist, und das trägerseitige Lager (87; 127) in der Mitte des trägerseitigen Paßbereichs (86; 126) vorgesehen ist;
und wobei der gehäuseseitige Paßbereich (66; 111) auf der Seite des Kurbelgehäuses in einem kreisförmigen Loch ausgebildet ist, welches einen Innendurchmesser besitzt, der im wesentlichen gleich dem Außendurchmesser des trägerseitigen Paßbereichs (86; 126) ist, und das gehäuseseitige Lager (68; 112) in der Mitte des kreisförmigen Lochs des gehäuseseitigen Paßbereichs (66; 111) vorgesehen ist.

## Revendications

1. Structure de montage d'un réducteur (96; 131) d'un démarreur (80; 120), comprenant :
un support de moteur (85; 125) monté d'un seul tenant sur ledit démarreur (80; 120), afin de supporter rigidement ledit démarreur (80; 120) sur un carter de vilebrequin (16L; 110);
un palier côté support (87; 127), prévu sur ledit support de moteur (85; 125) afin de supporter une extrémité d'un arbre de réducteur (95; 130);
une partie montage côté support (86; 126) formée sur ledit support de moteur (85; 125) en une position se trouvant autour dudit palier côté support (87; 127):
un palier côté carter (68; 112) prévu sur le carter de vilebrequin (16L; 110) afin de supporter l'autre extrémité dudit arbre de réducteur (95; 130); et
une partie de montage côté carter (66; 111) formée sur ledit carter de vilebrequin (16L; 110), en une position se trouvant autour dudit palier côté carter (68; 112);
dans laquelle, l'une parmi ladite partie ce montage côté support (86;126) et ladite partie de montage côté carter (66; 111) est insérée dans l'autre d'entre elles.

2. Structure de montage d'un réducteur (96; 131) d'un démarreur (80; 120) selon la revendication 1, dans laquelle ladite partie de montage côté support (86; 126) se trouvant du côté support de moteur est réalisée sous une forme de colonne ou cylindrique, et ledit palier côté support (87; 127) est prévu au centre de ladite partie de montage côté support (86; 126); et
ladite partie de montage côté carter (66; 111) se trouvant du côté carter de vilebrequin est réalisée sous la forme d'un trou circulaire dont le diamètre intérieur est sensiblement égal au diamètre extérieur de ladite partie de montage côté support (86; 126), et ledit palier côté carter (68; 112) est prévu au centre dudit trou circulaire de ladite partie de montage côté carter (66; 111).
